# EUROPÄISCHE PATENTSCHRIFT

(11) **EP 2 269 005 B1**
(45) Veröffentlichungstag und Bekanntmachung des Hinweises auf die Patenterteilung: **15.06.2016**
(21) Anmeldenummer: 10715658.0
(22) Anmeldetag: 01.02.2010
(51) Int. Cl.: G01D 5/20

(54) **POSITIONSSENSOR**
POSITION SENSOR
CAPTEUR DE POSITION

(30) Priorität: 02.03.2009 DE 102009011060; 28.05.2009 DE 102009022992
(43) Veröffentlichungstag der Anmeldung: 05.01.2011
(73) Patentinhaber: Micro-Epsilon Messtechnik GmbH & Co. KG, 94496 Ortenburg (DE)
(72) Erfinder: HRUBES, Franz, 94094 Rotthalmünster (DE)
(74) Vertreter: Patent- und Rechtsanwälte Ullrich & Naumann
(86) Internationale Anmeldenummer: PCT/DE2010/000096
(87) Internationale Veröffentlichungsnummer: WO 2010/099770

(56) Entgegenhaltungen:
- DE-A1- 19 855 685
- DE-T2- 69 219 498
- US-A- 3 045 227
- US-A- 3 142 810

## Beschreibung

Die Erfindung betrifft einen berührungslos arbeitenden Abstandssensor, der durch Feldstärkemessung eines elektromagnetischen Feldes, das von Sendespulen abgestrahlt und mit Hilfe von Empfangsspulen detektiert wird, die relative Verschiebung und/oder die relative Position zweier gegenüber liegender Objekte zueinander messbar macht. Im Konkreten betrifft die Erfindung einen Positionssensor mit zwei Spulen, wobei die erste Spule, Sendespule, derart mit einer bestimmten Wechselspannung gespeist wird, dass sie ein elektromagnetisches Feld abstrahlt wobei dieses Feld mittels der zweiten Spule, Empfangsspule, empfangen bzw. detektiert wird, wobei der Positionssensor des Weiteren eine dritte Spule, die ein elektromagnetisches Feld abstrahlt, und eine vierte Spule und eine fünfte Spule aufweist, die das elektromagnetische Feld der dritten Spule empfangen oder detektieren, wobei die Achse der dritten Spule in der selben Richtung wie die Achse der ersten Spule liegt, wobei die erste Spule und die dritte Spule nebeneinander liegen und wobei die zweite Spule neben der vierten Spule und der fünften Spule liegt,

Sensoren zur Messung der Verschiebung zweier Objekte zueinander sind allgemein bekannt. Es gibt unterschiedliche Messprinzipien, die jeweils bestimmte Vorteile, aber auch Nachteile haben. Je nach Anforderung hinsichtlich Genauigkeit, Auflösung, Temperaturabhängigkeit, Messgeschwindigkeit, Langzeitstabilität, zulässiger Verlustleistung usw., und den vorhandenen Umgebungsbedingungen ist die jeweils beste Lösung zu wählen. Extrem hohe Anforderungen in dieser Hinsicht bringt die Positions- und Verschiebungsmessung bei der Präzisionsoptik mit sich. Hier geht es um Genauigkeiten im Nanometer- und Subnanometerbereich. Zwei Anwendungsbereiche sind von besonderer Bedeutung:
Die Mikropositionierung bei der Herstellung von Halbleitern und die Justage von segmentierten Spiegeln zueinander bei Spiegelteleskopen zur Sternbeobachtung. Mehrere verschiedene Prinzipien finden dabei bisher Anwendung.

Sehr exakte Messungen lassen sich mit optischen Sensoren realisieren. Auch kapazitive Sensoren sind sehr präzise. Ein Beispiel hierfür ist in der FR 2 844 048-A1 beschrieben. Ein großer Nachteil bei beiden Prinzipien ist die Abhängigkeit der Messung bei Feuchtigkeits- und Schmutzeinfluss. Sie sind also prinzipiell für die Verwendung bei den Spiegelteleskopen nicht geeignet. Wegsensoren, die nach dem Wirbelstromverlustprinzip arbeiten, sind zwar unempfindlich gegen Wasser und Schmutz, jedoch ist die Temperaturabhängigkeit der Messung nur mit sehr großem Aufwand so exakt wie erforderlich zu kompensieren.

Die französische Offenlegung FR 2 907 211 A1 löst die Aufgabe mit einer Anordnung eines Spulenarrays mit einem leitfähigen Messobjekt, das auf dem gegenüber liegenden Spiegelsegment angebracht ist. Ausgewertet wird dabei die Induktivitätsveränderung, die das Messobjekt in Abhängigkeit seiner Position zu den einzelnen Spulen des Arrays bewirkt. Mit dieser Anordnung kann in drei Achsen gemessen werden. Ein Nachteil der Anordnung ist die verhältnismäßig große Bauform und damit eine große Abhängigkeit von mechanischen Verformungen, die z. B. durch Temperaturänderungen entstehen können. Außerdem spielen die temperaturabhängigen Leitfähigkeiten der Spulen und des Messobjekts eine nicht zu vernachlässigende Rolle.

Somit verbleibt als einzige Möglichkeit ein transformatorisches Prinzip, basierend auf einer Primär- und einer Sekundärspule (Sende- und Empfangsspule).

Die US 4,816,759 beschreibt hierzu eine Anordnung mit einem Oszillator, der zwei Sendespulen speist, die in Serie geschaltet sind, und zwei Empfangspulen, die jeweils mit einem Parallelkondensator zu einem Schwingkreis ergänzt sind. Eine der beiden Sendespulen ist auf der Stirnfläche von einem Spiegelsegment angebracht. Die dazugehörige Empfangsspule ist auf der Stirnfläche des gegenüber liegenden Spiegelsegments positioniert. Das zweite Sende-Empfangspaar ist versetzt auf gleicher Höhe entlang der Stirnflächen, mit umgekehrter Sende- Empfangsrichtung, platziert. Die Verschiebung zwischen der Sendeseite und der Empfangsseite wird durch Phasenmessung ausgewertet. Hiermit ergibt sich bei planparalleler Übereinstimmung der Spiegelsegmente zueinander ein Nulldurchgang der Phasenlage des Messsignals. Dieses Prinzip ist zwar grundsätzlich geeignet, die Parallelität der Segmente zueinander auszurichten, liefert aber keine weiteren Informationen über weitere Winkel- und Abstandsabhängigkeiten der Segmente zueinander.

Die WO 2007/006910 beschreibt ein transformatorisches Prinzip mit zwei in Serie geschalteten Primärspulen (Sendespulen) und zwei gegenüber liegenden Sekundärspulen (Empfangsspulen). Die Spulen sind als Flachspulen ausgeführt, wobei die Sende- und die Empfangsspulen jeweils nebeneinander und parallel zueinander liegend angeordnet sind. Die Sendespulen werden gegenphasig mit einem Wechselspannungssignal gespeist. Mit diesem Prinzip ergibt sich eine exakte Nullpunkterfassung durch Differenzmessung der beiden Empfangsspannungen. Gleichzeitig kann durch Summenbildung der beiden Empfangsspannungen der Abstand zwischen den beiden Spiegelsegmenten gemessen werden. Durch Verhältnisbildung der Differenzspannung und der Summenspannung kann die Abstandsabhängigkeit der Messung der Parallelität der Spiegelsegmente zueinander eliminiert werden. Was jedoch nicht eliminiert werden kann, ist eine Winkelabhängigkeit.

Ein weiterer Nachteil ist die erforderliche große Fläche für die Spulen, da damit wieder mechanische Verformungen z. B. durch thermische Ausdehnungen eine nicht zu vernachlässigende Rolle spielen.

Aus der DE 198 55 685 A1 ist ein Positionssensor bekannt, der zwei Spulen 4a und 8a aufweist, wobei die erste Spule 4a derart mit einer bestimmten Wechselspannung gespeist wird, dass sie ein elektromagnetisches Feld abstrahlt, wobei dieses Feld mittels der zweiten Spule 8a empfangen oder detektiert wird. Die Achse der zweiten Spule 8a ist zu der Achse der ersten Spule 4a geneigt. Bei dem bekannten Positionssensor sind die Empfangsspulen 8a nebeneinanderliegend auf einem Substrat 7 angeordnet. Die Achsen der Empfangsspulen 8a verlaufen parallel zueinander. Ein Vorteil des bekannten Positionssensors soll darin bestehen, dass mit ihm hochgenaue Positionsmessungen durchgeführt werden können, wobei grundsätzlich keine Offsetkomponenten erzeugt werden.

Die DE 692 19 498 T2 zeigt ebenfalls einen Positionssensor, wobei eine mit einer Wechselspannung versorgte Spule 7 ein elektromagnetisches Feld abstrahlt, das von zwei senkrecht aufeinander stehenden Empfangsspulen 5 und 6 empfangen wird. Des Weiteren weist der in Fig. 1 dieses Dokuments gezeigte Positionssensor noch eine Zielspule 1 auf.

Aus der US 3 142 810 A ist in den dortigen Fig. 2 und 3 ein Positionssensor gezeigt, der mehrere Spulen aufweist, die in geeigneter Weise zueinander orientiert sind.

Der vorliegenden Erfindung liegt die Aufgabe zugrunde, die zuvor im Stand der Technik erörterten Nachteile soweit wie möglich zu vermeiden.

Erfindungsgemäß wird die voranstehende Aufgabe durch einen Positionssensor mit den Merkmalen des Anspruchs 1 gelöst.

### Der Erfindung liegt folgendes Prinzip zugrunde:

Zwei Spulen bilden einen Transformator, d.h. eine Spule wirkt als Primärspule (Sendespule), die zweite Spule als Sekundärspule (Empfangsspule). Die Kopplung zwischen den Spulen verändert sich, wenn sich die relative Position der beiden Spulen zueinander ändert. Die beiden Spulen sind so angeordnet, dass sie rechtwinklig aufeinander stehen, wobei die Achse der Sendespule parallel zur Ebene der Empfängerspule angeordnet ist.

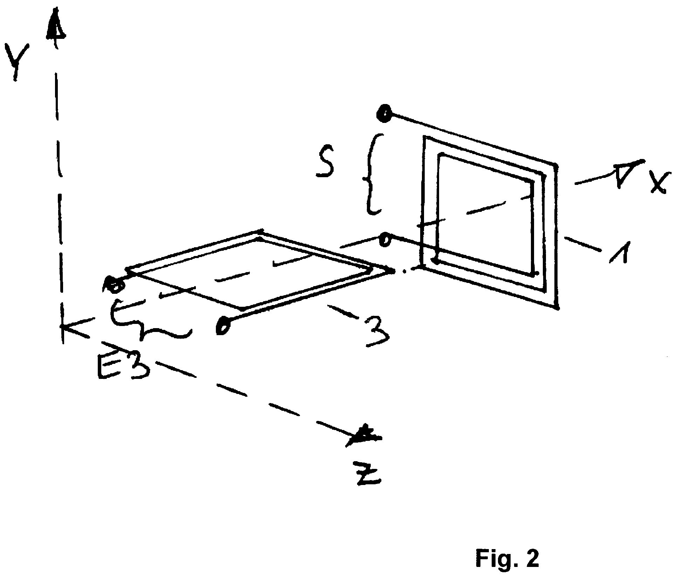

Gemäß der Darstellung in Fig. 2, die kein Ausführungsbeispiel der Erfindung zeigt, sondern dem Verständnis der Erfindung dient, wird die Sendespule 1 mit einer hochfrequenten Wechselspannung konstanter Amplitude gespeist. Durch das elektromagnetische Wechselfeld wird in der Empfängerspule 3 eine Spannung gleicher Frequenz induziert. Die Höhe der Spannung ist abhängig von der Kopplung der Spulen, die im vorliegenden Fall von der Position der Spulen zueinander abhängt.

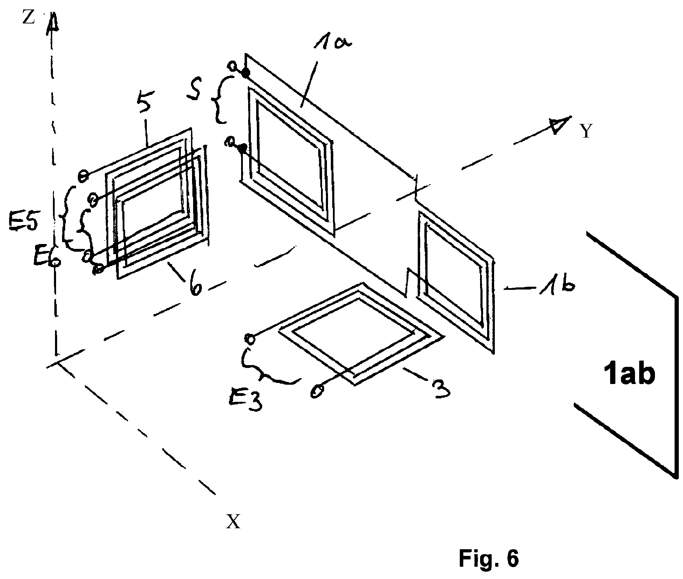

In einer speziellen erfindungsgemäßen Anordnung (Fig. 6) kann man mit mehreren Spulen die Position eines Messobjektes bestimmen. Zwei Sendespulen 1a und 1b werden mit Wechselspannung gleicher oder unterschiedlicher Frequenz und gleicher oder unterschiedlicher, aber konstanter Amplitude gespeist. Bei gleicher Speisung können die Spulen parallel oder in Reihe geschaltet sein. In der Empfangsspule 3, die der Sendespule 1 b gegenüberliegt, wird eine Spannung induziert. Ebenfalls wird in den Empfangsspulen 5 und 6 eine Spannung induziert. Diese Spulen 5 und 6 sind parallel zueinander ausgerichtet und gegenüber der Sendespule 1a angeordnet. Mit der Spule 3 kann damit in z-Richtung gemessen werden, mit 5 und 6 in x- und y - Richtung: Eine Verschiebung der Spulen 5 und 6 parallel zur Spule 1a in x - Richtung ist proportional zur Differenz der Signale von E5 und E6 (E5-E6). Eine Änderung des Abstandes der Spulen 5 und 6 zur Spule 1a in y-Richtung dagegen ist proportional zur Summe des Signals von E5 und E6 (E5+E6).

Die Ansteuerung der Sendespulen 1a und 1b erfolgt mit bekannten Oszillatorschaltungen. Sinnvoll ist es, die Spulen mit einem Parallelkondensator zu ergänzen, und in Resonanz anzusteuern, da dann die Empfindlichkeit besonders groß ist und die Stromaufnahme gering.

Die erfindungsgemäße Messanordnung zeichnet sich besonders durch eine extrem hohe Empfindlichkeit (im messtechnischen Sinne) aus, wodurch sehr hohe Auflösungen erreicht werden. Mit einer beispielhaften Anordnung können Auflösungen im Bereich von Sub-Nanometer erzielt werden bei Messbereichen, die bei 500µm liegen können. Die erforderlichen Spulenabmessungen sind verhältnismäßig gering.

Um die EMV-Abstrahlung zu verringern, können die Spulen 1a und 1b gegenphasig betrieben werden. Dadurch heben sich die elektromagnetischen Felder im Fernfeld auf, wodurch eine Störbeeinflussung im Fernfeld verringert wird. Um die Störempfindlichkeit der Empfangsspule 3 zu verringern, wird zur Messung der Quotient aus dem Signal von E3 und dem Summensignal von E5 und E6 verwendet: E3/(E5+E6). Damit werden Störeinflüsse, die auf 3 und 5 und 6 gleichermaßen wirken, weitgehend eliminiert (z.B. EMV-Störungen oder vor allem auch Temperatureinflüsse). Voraussetzung ist, dass die Spulen 3 und 5 und 6 hinreichend nahe beieinander angeordnet sind, um eine gleiche Beeinflussung zu erreichen. In gleicher Weise kann durch Quotientenbildung für die Messung der Verschiebung in x-Richtung eine Kompensation von Störeinflüssen erreicht werden, indem der Quotient der Differenz und der Summe von 5 und 6 gebildet wird. ((E5 - E6)/(E5 + E6)).

Die Erfindung lässt sich am Besten anhand eines konkreten Ausführungsbeispiels erörtern. Dazu folgendes:
Eine geeignete Messanordnung kann dazu verwendet werden, um Positionen in drei Richtungen zu detektieren, nämlich entweder eine Abstandsänderung der Sensorplatte B relativ zum Sensorblock A (y-Richtung) oder eine Verschiebung von B gegenüber von A (x-Richtung), oder eine Verschiebung in z-Richtung. Durch die Anordnung der Spulen zueinander können drei unabhängige Signale für die Richtungen x, y und z erzeugt werden. Sinnvoll ist es, die Spulen nahe beieinander anzuordnen, um eine kompakte Bauform zu erhalten und auch die für die Kompensation notwendige gleiche Beeinflussung zu erreichen. Die Spulen könnten z.B. als Flachspulen auf einer herkömmlichen Leiterplatte ausgeführt werden. Die Herstellung wäre dadurch besonders einfach und kostengünstig, jedoch nicht besonders temperatur- und langzeitstabil. Auf den Leiterplatten könnte auch die Elektronik für die Ansteuerung und Auswertung der Spulen angeordnet werden, wodurch die Anordnung ebenfalls kompakt und günstig wäre. Ein anderes Ausführungsbeispiel ist dadurch gekennzeichnet, dass die Spulen als Flachspulen auf einem Keramiksubstrat durch bekannte Verfahren hergestellt werden.

Besonders günstig ist, wenn die Spulen auf einem Keramik-Multilayer-Substrat hergestellt werden, wobei die Spulen im Innern der Sandwich-Struktur liegen. Dann sind die Spulen durch die hermetische Kapselung, die beim Herstellungsprozess der Keramik-Multilayer entsteht, von der Umgebung komplett abgeschirmt. Dadurch erhält man eine besonders langzeit- und temperaturstabile Ausführung der Spulen. Die dadurch hergestellten Spulen zeichnen sich also durch eine hervorragende Umweltstabilität (hermetisch gekapselt) und Langzeitstabilität aus. Dies ist gerade dann von Vorteil, wenn die hohe Auflösung der Messanordnung ausgenutzt werden soll. Besonders günstig ist es, wenn die Spulen nicht als kreisförmige Spulen ausgeführt werden, sondern als Spulen mit rechteckiger Fläche. Dadurch ist das resultierende elektromagnetische Feld innerhalb der Spulenfläche nahezu konstant. Dann ist bei der Auswertung z.B. der Messung in y der resultierende Messwert nur von dem Abfall der Feldstärke in y-Richtung (annähernd umgekehrt proportional zum Abstand) abhängig und nicht von der Spulenform, was sich günstig auf die Auswertung auswirkt.

Die beschriebene Messanordnung kann überall dort eingesetzt werden, wo sehr präzise Abstände oder Positionen zu messen sind. Die an zweiter Stelle beschriebene Anordnung ist besonders geeignet für Messungen in allen 3 Raumkoordinaten, wo besonders hohe Auflösungen und Stabilitätsanforderungen herrschen.

Beispiel dafür sind:
- Micro-Positionierung in der Halbleiterherstellung (Waferstage): Dort müssen bei der Halbleiterherstellung die Wafer sehr genau relativ zu den Belichtungsachsen ausgerichtet werden. Bei den immer kleineren Strukturbreiten, die in heutigen Halbleiterprozessen verwendet werden, ist eine exakte Positionierung für die Qualität notwendig. Zukünftige Belichtungssysteme, die mit EUV-Strahlung arbeiten, benötigen Positioniergenauigkeiten im Bereich von Pikometern. Dies ist mit der vorliegenden Messanordnung möglich.
- Positionierung von segmentierten Spiegeln in Spiegelteleskopen: Moderne Spiegelteleskope bestehen nicht mehr nur aus einem großen Spiegel, sondern aus vielen Einzelspiegeln, die bienenwabenförmig angeordnet sind. Die Einzelspiegel müssen exakt zueinander ausgerichtet sein, damit bei der Sternbeobachtung das Licht genau im Brennpunkt fokussiert ist Aufgrund der großen Entfernungen, die mit diesen Teleskopen beobachtet werden, betragen die Positioniergenauigkeiten der Einzelspiegel wenige Nanometer zueinander. Die Spiegel müssen dabei in allen drei Raumrichtungen exakt ausgerichtet sein, um eine Fokussierung im Brennpunkt zu erreichen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen in schematischen Darstellungen
- Fig. 1: eine aus dem Stand der Technik bekannte Anordnung,
- Fig. 2: eine Anordnung zum Verständnis der Erfindung,
- Fig. 3: eine Anordnung zum Verständnis der Erfindung,
- Fig. 4: eine Anordnung zum Verständnis der Erfindung als Kombination der Anordnungen aus den Fig. 1 und 2,
- Fig. 5: eine Anordnung zum Verständnis der Erfindung,
- Fig. 6: ein Ausführungsbeispiel der Erfindung, erweitert auf drei Messachsen,
- Fig. 7: ein Ausführungsbeispiel der Erfindung,
- Fig. 8: ein Ausführungsbeispiel der Erfindung.

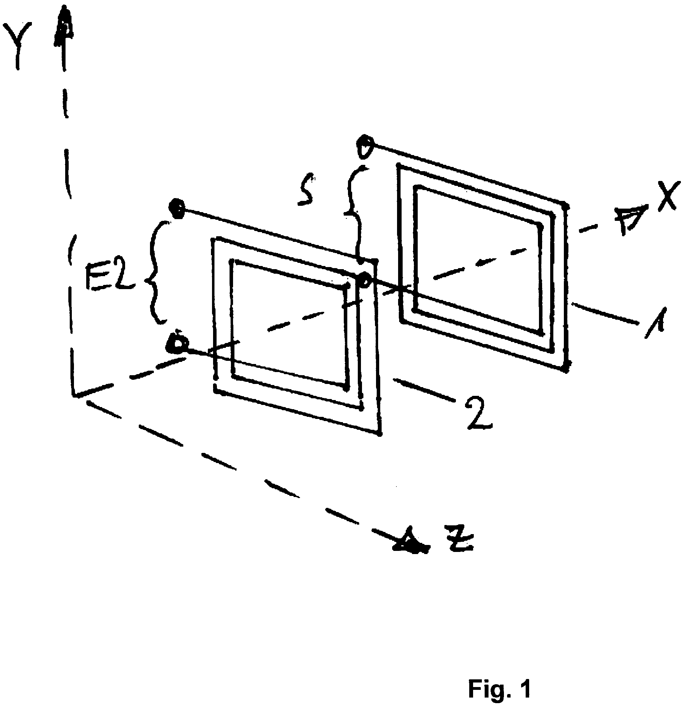

Gemäß der Darstellung in Fig. 1 wird eine bevorzugt rechteckförmige Spule (1) mit konstanter Amplitude einer bestimmten Frequenz gespeist (S), so dass sie ein konstantes elektromagnetisches Feld abgestrahlt. Dieses wird mit Hilfe einer zweiten Spule (2), deren Achse identisch zur Achse der Sendespule angeordnet ist, empfangen. Die Empfangsspannung (E2) ist direkt vom Abstand zwischen der Sendespule und der Empfangsspule, d. h. in y - Richtung abhängig.

Diese Spannung ist nichtlinear vom Abstand abhängig, und verringert sich stetig mit steigendem Abstand. Um damit den Abstand der Spulen zueinander messen zu können, muss die Kennlinie entsprechend rechnerisch oder schaltungstechnisch linearisiert werden.

Fig. 2 zeigt eine Anordnung zum Verständnis der Erfindung. Eine bevorzugt rechteckförmige Spule (1) wird mit konstanter Amplitude einer bestimmten Frequenz gespeist (S), so dass sie ein konstantes elektromagnetisches Feld abgestrahlt. Dieses wird mit Hilfe einer zweiten Spule (3), deren Achse 90° in vertikaler Richtung (z) gegenüber der Achse der Sendespule liegt, empfangen.

Liegt die Spule (3) mittig gegenüber der Spule (1) entsteht keine Induktionsspannung (E3) an den Spulenenden, da keine der auftretenden magnetischen Feldlinien die Spule (3) kreuzt. Bei unsymmetrisch einwirkendem Feld tritt eine Spannung an den Spulenenden auf, die über einen gewissen Bereich beidseitig der Mittenposition sich linear mit der parallel verlaufenden Positionsverschiebung Richtung z verändert, und dabei beim Durchfahren durch die Mittenposition die Phasenlage gegenüber dem Sendesignal um 180° dreht. Auf diese Art kann ein einfacher Sensor realisiert werden, mit dessen Hilfe die Parallelverschiebung der zwei Spulen zueinander gemessen werden kann, wobei der erzielbare Messweg etwas kleiner als der Spulendurchmesser der Sendespule ist. Die induzierte Empfangsspannung ist- wie schon erwähnt- im Mittenbereich linear, und wird gegen Ende des Bereichs immer stärker nichtlinear. Die Steigung der Kennlinie über den Messweg ist dabei abhängig vom Grundabstand der Spulen zueinander.

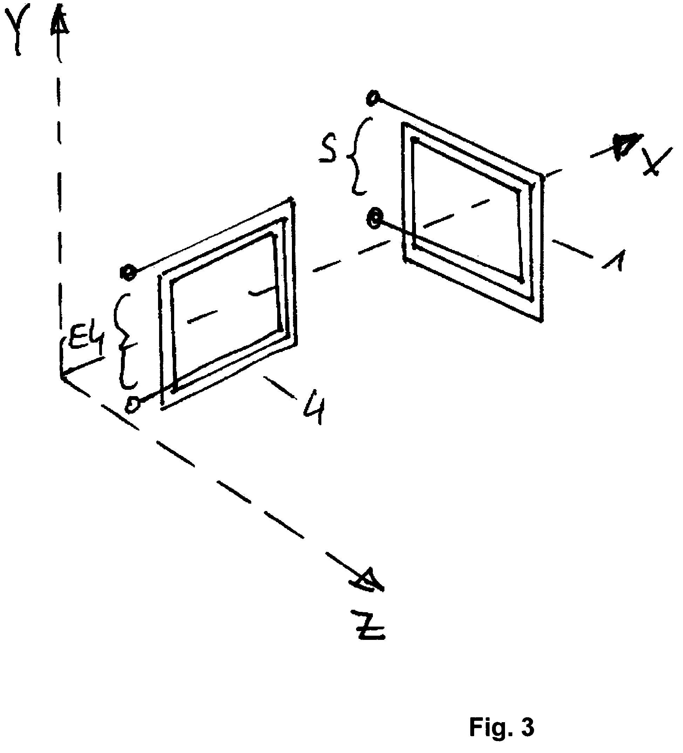

Gemäß der dem Verständnis dienenden Darstellung in Fig. 3 wird eine bevorzugt rechteckförmige Spule (1) mit konstanter Amplitude einer bestimmten Frequenz gespeist (S), so dass sie ein konstantes elektromagnetisches Feld abgestrahlt. Dieses wird mit Hilfe einer zweiten Spule (4), deren Achse 90° in horizontaler Richtung (x) gegenüber der Achse der Sendespule liegt, empfangen.

Liegt die Spule (4) mittig gegenüber der Spule (1), entsteht analog zu Fig. 2 keine Induktionsspannung (E4) an den Spulenenden. Bei unsymmetrisch einwirkendem Feld tritt eine Spannung an den Spulenenden auf, die über einen gewissen Bereich beidseitig der Mittenposition sich linear mit der parallel verlaufenden Positionsverschiebung Richtung x verändert, und dabei beim Durchfahren durch die Mittenposition die Phasenlage gegenüber dem Sendesignal um 180° dreht. Auf diese Art kann ein einfacher Sensor realisiert werden, mit dessen Hilfe die Parallelverschiebung der zwei Spulen zueinander gemessen werden kann, wobei der erzielbare Messweg etwas kleiner als der Spulendurchmesser der Sendespule ist. Die induzierte Empfangsspannung ist- wie schon erwähnt- im Mittenbereich linear, und wird gegen Ende des Bereichs immer stärker nichtlinear. Die Steigung der Kennlinie über den Messweg ist dabei abhängig vom Grundabstand der Spulen zueinander.

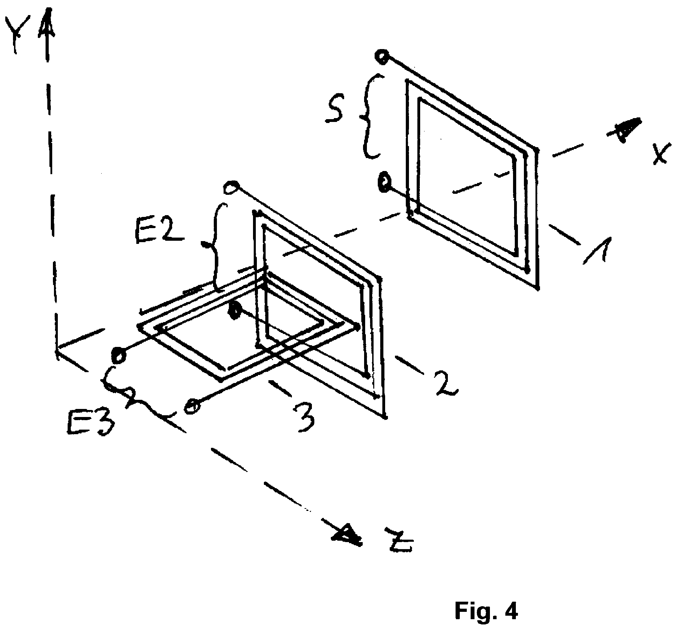

Zum weiteren Verständnis zeigt Fig. 4 eine Kombination der Anordnungen aus den Fig. 1 und Fig. 2. Die beiden Spulen (2) und (3) sind dabei ineinander verschachtelt. Die Spulenebene der Spule (3) liegt auf der Achse der Spule (2). Um eine Unabhängigkeit der Steigung der Kennlinie der Empfangsspannung (E3) vom Abstand zur Spule (1) zu erreichen, muss die Feldstärke mit Hilfe der zweiten Spule (2) gemessen werden (Empfangsspannung E2). Durch Bildung des Quotienten (E3/E2) aus den beiden Empfangsspannungen wird die Abstandsunabhängigkeit der Positionsmessung in z - Richtung über einen gewissen Verschiebungsbereich realisiert. Dabei ist zu beachten, dass sich das Vorzeichen beim Nulldurchgang wegen der Phasendrehung, die durch die überwiegend wirkende Feldrichtung entsteht, umkehrt!

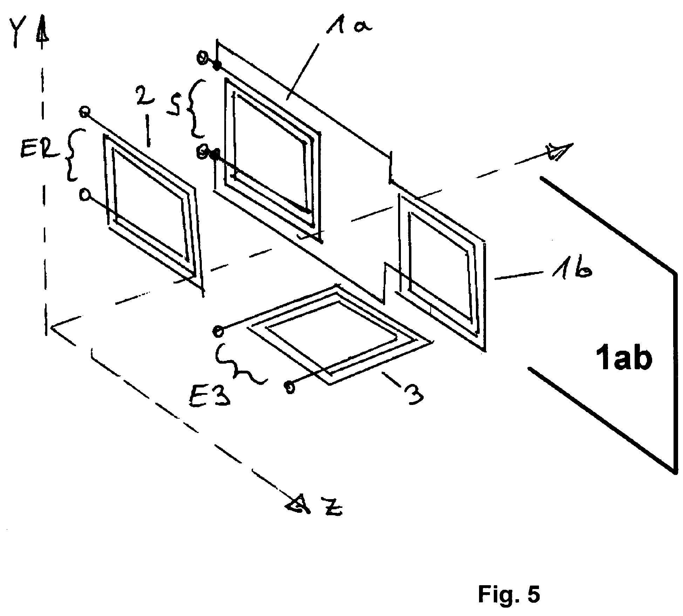

Fig. 5 zeigt eine andere Möglichkeit einer dem Verständnis dienenden Anordnung, nämlich die Verwendung zweier Sendespulen (1a) und (1b), wobei diese nebeneinander auf gleicher Ebene (1 ab) angeordnet sind. Die beiden Empfangsspulen (2) und (3) liegen ebenfalls im gleichen Abstand nebeneinander und sind fest mechanisch miteinander verbunden. Die Sendespulen werden gleichzeitig mit konstanter Wechselspannung (S) gespeist. Wie bei Fig. 4 gilt auch hier, dass durch Quotientenbildung (E3/E2) eine Abstandsunabhängigkeit der Positionsmessung in z-Richtung erreicht wird.

Analog dazu ist auch die Kombination der Spulen (4) und (2) möglich und als erfinderisch anzusehen.

Fig. 6 zeigt ein Ausführungsbeispiel der Erfindung, erweitert auf drei Messachsen.

Um eine möglichst geringe Anzahl von Sendespulen zu benötigen gibt es die Möglichkeit, zwei Empfangsspulen (5) und (6) sehr nahe nebeneinander anzuordnen. Dies kann entweder für die x-Richtung oder die z-Richtung gemacht werden. Wenn die beiden Spulen so angeordnet sind, dass sie, wie in Fig. 6 gezeigt, ihre gemeinsame Achse in x-Richtung verläuft, gilt Folgendes:
Aus der Summe der beiden resultierenden Empfangsspannungen (E5) und (E6) erhält man dabei das Signal für den Abstand zur Sendespule (1a), und damit zur Ebene (1 ab), auf der die beiden Spulen (1a) und (1 b) liegen. Die Differenz (E5-E6) der beiden Spannungen ergibt die Position in Bezug zur Mitte der Sendespule (1) in x-Richtung. Durch Quotientenbildung ((E5-E6)/(E5+E6)) wird die Messung der Position in x-Richtung also wiederum unabhängig vom Abstand der beiden Spulen zur Ebene (1 a b). Gleichzeitig kann analog das abstandsunabhängige Maß für die Position in z-Richtung mit Hilfe des Quotienten aus (E3/(E5+E6)) ermittelt werden. Alle diese Anordnungen erfordern die Verbindung der Sendespulen zur Wechselspannungsquelle über ein Kabel.

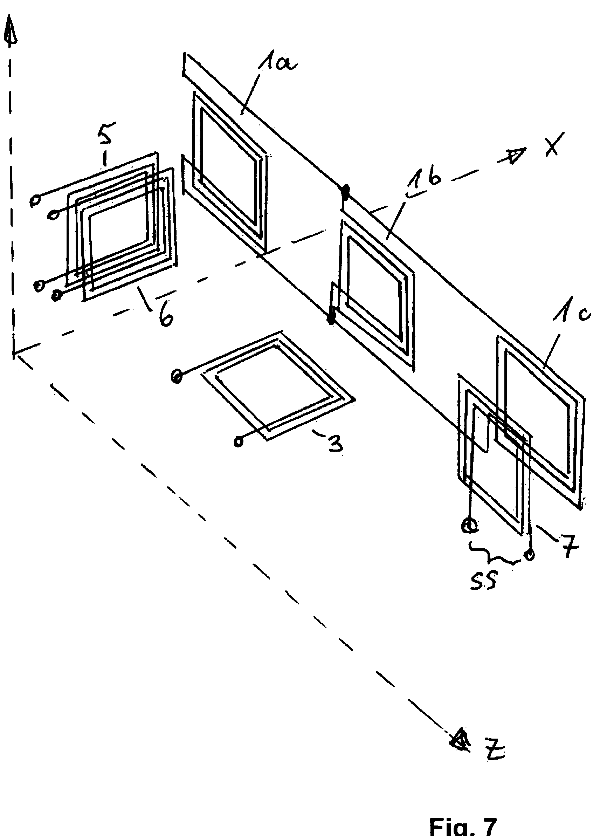

Fig. 7 zeigt ein weiteres Ausführungsbeispiel der Erfindung, nämlich eine weitere Möglichkeit, die eine Kabelverbindung überflüssig macht. Auf gleicher Ebene wie die Sendespulen, ist eine weitere Spule (1c) angeordnet, die als Empfangsspule zur Energieübertragung dient. Gegenüber der Spule (1c) liegt eine Sendespule (7), die fest mit den Empfangsspulen (3), (5) und (6) mechanisch verbunden ist. Über diese Sendespule wird durch Einspeisung einer konstanten Wechselspannung (SS) ein konstantes elektromagnetisches Feld abgestrahlt. Die dabei in die Spule (1c) induzierte Spannung wird an die beiden Sendespulen (1a) und (1b) durch direkte elektrische Verbindung weitergegeben.

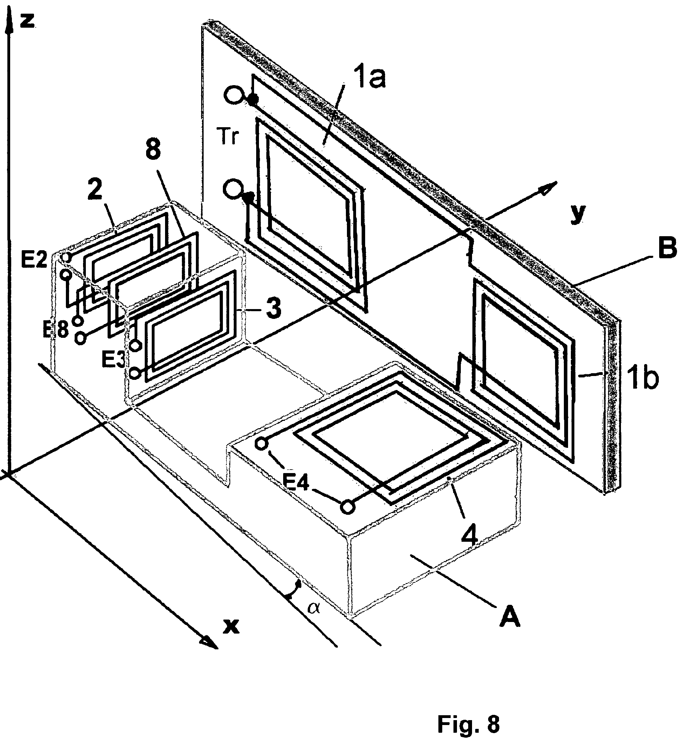

Gemäß der Darstellung in Fig. 8 lassen sich im Rahmen eines weiteren Ausführungsbeispiels der Erfindung winkelabhängige Messfehler (Winkel a), die z. B. bei der Montage der beiden Sensorblöcke A (Empfangsspulen) und B (Sendespulen) auftreten, ausgleichen. Dazu besteht die Möglichkeit, in der Mitte zwischen den beiden Empfangsspulen 2 und 3 eine weitere Empfangsspule 8 zu platzieren. Die Summe der Empfangsspannungen E2 und E3 ergibt wieder den Messabstand in y-Richtung, um zum Beispiel bei der Montage eine exakte Ausrichtung der beiden Sensorblöcke A und B zueinander zu ermöglichen, können die Empfangspannungen E8 und die Differenzspannung (E2-E3), die ja auch abhängig vom Winkel a ist, jeweils gleichzeitig gemessen, und durch mechanische Justierung auf Null Volt eingestellt werden. Somit ist eine äußerst präzise Kalibrierung möglich.

Die Differenzspannung (E2-E3) die durch einen vorhandenen Winkelfehler hervorgerufen wird bleibt auch bei einer Verschiebung der beiden Sensorblöcke A und B in x-Richtung konstant. Somit kann, anstatt den Fehler durch mechanische Ausrichtung zu eliminieren, der Fehler rechnerisch eliminiert werden, indem der Winkelfehler k, der sich bei der Differenzspannung (E2-E3) in Abhängigkeit vom Winkel a ergibt, und gleichzeitig bei der Empfangsspannung E8 im gleichen Verhältnis auftritt, mit dem passenden Faktor m multipliziert, und vom Signal E8 subtrahiert wird.

Die Verschiebung in x-Richtung wird in diesem Fall mit Hilfe des Spannungsverhältnisses (E8 - k * m) / (E2+E3) gemessen.

Um die Empfindlichkeit all dieser Anordnungen zu optimieren ist es von Vorteil, die Spulen durch Parallelschalten von Kondensatoren zu Schwingkreisen zu ergänzen, deren Resonanz auf die verwendete Frequenz abgestimmt ist. Dies reduziert sendeseitig den erforderlichen Speisestrom in die Sendespulen, und bringt empfangsseitig große Empfangsspannungen, die bei nahem Abstand zu den Sendespulen nur geringfügig kleiner oder - wenn die Induktivität der Empfangsspule größer als die der Sendespule ist, evtl. sogar größer als die Sendespannungen sind. Damit ergibt sich ein sehr guter Signal-Rauschabstand.

Selbstverständlich stellen diese Anordnungen nur Beispiele dar. Prinzipiell sind noch andere Anordnungen dieser Art denkbar.

## Patentansprüche

1. Positionssensor mit zwei Spulen (1b, 3), wobei die erste Spule, Sendespule (1b), derart mit einer bestimmten Wechselspannung gespeist wird, dass sie ein elektromagnetisches Feld abstrahlt wobei dieses Feld mittels der zweiten Spule, Empfangsspule (3), empfangen bzw. detektiert wird, wobei der Positionssensor des Weiteren eine dritte Spule (1a), die ein elektromagnetisches Feld abstrahlt, und eine vierte Spule (5) und eine fünfte Spule (6) aufweist, die unabhängig voneinander das elektromagnetische Feld der dritten Spule (1a) empfangen oder detektieren, wobei die Achse der dritten Spule (1a) in der selben Richtung wie die Achse der ersten Spule (1b) liegt, wobei die erste Spule (1b) und die dritte Spule (1a) nebeneinander liegen und wobei die zweite Spule (3) neben der vierten Spule (5) und der fünften Spule (6) liegt, **dadurch gekennzeichnet, dass** die vierte Spule (5) und die fünfte Spule (6) eine gemeinsame Achse aufweisen, dass die gemeinsame Achse orthogonal zu der Achse der zweiten Spule (3) liegt und dass die gemeinsame Achse und die Achse der zweiten Spule (3) jeweils orthogonal zu den Achsen der ersten Spule (1b) und der dritten Spule (1a) liegen, wobei sich die jeweilige Kopplung zwischen den Empfangs- und den zugeordneten Sendespulen verändert, wenn sich die relative Position der Empfangsspulen (3, 5, 6) einerseits zur Position der Sendespulen (1a, 1b) andererseits ändert.

2. Positionssensor nach Anspruch 1, **dadurch gekennzeichnet, dass** die erste Spule als rechteckförmige Spule ausgeführt ist.

3. Positionssensor nach Anspruch 1 oder 2, **dadurch gekennzeichnet, dass** die zweite Spule als rechteckförmige Spule ausgeführt ist.

4. Positionssensor nach einem der Ansprüche 1 bis 3, **dadurch gekennzeichnet, dass** die dritte Spule als rechteckförmige Spule ausgeführt ist.

5. Positionssensor nach einem der Ansprüche 1 bis 4, **dadurch gekennzeichnet, dass** die Feldrichtungen der Sendespulen so angeordnet sind, dass sich die Felder bei großem Abstand gegenseitig aufheben.

6. Positionssensor nach einem der Ansprüche 1 bis 5, **dadurch gekennzeichnet, dass** die Spulen zu Schwingkreisen ergänzt sind.

7. Positionssensor nach einem der Ansprüche 1 bis 6, **dadurch gekennzeichnet, dass** die Spulen auf oder innerhalb Keramik-Multilayern ausgebildet sind.

## Claims

1. Position sensor having two coils (1b, 3), wherein the first coil, transmission coil (1b), is supplied in such a manner with a specific alternating-current voltage that it emits an electromagnetic field, wherein this field is received or detected by means of the second coil, receiving coil (3), wherein the position sensor further has a third coil (1a) which emits an electromagnetic field, and a fourth coil (5) and a fifth coil (6), which independently of each other receive or detect the electromagnetic field of the third coil (1a), wherein the axis of the third coil (1a) is located in the same direction as the axis of the first coil (1b), wherein the first coil (1b) and the third coil (1a) are located beside each other and wherein the second coil (3) is located beside the fourth coil (5) and the fifth coil (6), **characterised in that** the fourth coil (5) and the fifth coil (6) have a common axis, **in that** the common axis is located orthogonally with respect to the axis of the second coil (3), and **in that** the common axis and the axis of the second coil (3) are each located orthogonally with respect to the axes of the first coil (1b) and the third coil (1a), wherein the respective coupling between the receiving coils and the associated transmission coils changes when the relative position of the receiving coils (3, 5, 6) changes, on the one hand, with respect to the position of the transmission coils (a, 1b), on the other hand.

2. Position sensor according to claim 1, **characterised in that** the first coil is constructed as a rectangular coil.

3. Position sensor according to claim 1 or claim 2, **characterised in that** the second coil is constructed as a rectangular coil.

4. Position sensor according to any one of claims 1 to 3, **characterised in that** the third coil is constructed as a rectangular coil.

5. Position sensor according to any one of claims 1 to 4, **characterised in that** the field directions of the transmission coils are arranged in such a manner that the fields are mutually cancelled in the case of a large spacing.

6. Position sensor according to any one of claims 1 to 5, **characterised in that** the coils are supplemented to form oscillating circuits.

7. Position sensor according to any one of claims 1 to 6, **characterised in that** the coils are constructed on or inside multiple ceramic layers.

## Revendications

1. Capteur de position avec deux bobines (1b, 3), la première bobine (1b) étant alimentée avec une tension alternative définie telle qu'elle rayonne un champ électromagnétique, ce champ étant reçu ou respectivement détecté au moyen de la deuxième bobine (3), le capteur de position présentant en outre une troisième bobine (1a) qui rayonne un champ électromagnétique, et une quatrième bobine (5) et une cinquième bobine (6) qui reçoivent ou détectent indépendamment l'une de l'autre le champ électromagnétique de la troisième bobine (1a), l'axe de la troisième bobine (1a) étant situé dans la même direction que l'axe de la première bobine (1b), la première bobine (1b) et la troisième bobine (1a) étant juxtaposées, et la deuxième bobine (3) étant près de la quatrième bobine (5) et de la cinquième bobine (6), **caractérisé en ce que** la quatrième bobine (5) et la cinquième bobine (6) présentent un axe commun, **en ce que** l'axe commun est à angle droit par rapport à l'axe de la deuxième bobine (3), et **en ce que** l'axe commun et l'axe de la deuxième bobine (3) sont respectivement à angle droit par rapport aux axes de la première bobine (1b) et de la troisième bobine (1a), l'accouplement respectif entre les bobines réceptrices et les bobines émettrices affectées variant quand la position relative des bobines réceptrices (3, 5, 6) d'une part varie par rapport à la position des bobines émettrices (1a, 1b) d'autre part.

2. Capteur de position selon la revendication 1, **caractérisé en ce que** la première bobine est réalisée en tant que bobine rectangulaire.

3. Capteur de position selon la revendication 1 ou 2, **caractérisé en ce que** la deuxième bobine est réalisée en tant que bobine rectangulaire.

4. Capteur de position selon l'une des revendications 1 à 3, **caractérisé en ce que** la troisième bobine est réalisée en tant que bobine rectangulaire.

5. Capteur de position selon l'une des revendications 1 à 4, **caractérisé en ce que** les directions de champ des bobines émettrices sont disposées de telle sorte que les champs s'annulent mutuellement en cas de distance importante.

6. Capteur de position selon l'une des revendications 1 à 5, **caractérisé en ce que** les bobines sont complétées en circuits oscillants.

7. Capteur de position selon l'une des revendications 1 à 6, **caractérisé en ce que** les bobines sont constituées sur ou à l'intérieur de multicouches céramiques.
